# EUROPÄISCHE PATENTANMELDUNG

(11) **EP 2 282 017 A1**
(43) Veröffentlichungstag der Anmeldung: **09.02.2011**
(21) Anmeldenummer: 09151309.3
(22) Anmeldetag: 26.01.2009
(51) Int. Cl.: F01K 23/06, F23K 5/00

(54) **Synthesegasbrennstoffsystem mit Zweitbrennstoffbeimischung sowie Verfahren zum Betrieb eines Synthesegasbrennstoffsystems**

(71) Anmelder: Siemens Aktiengesellschaft, 80333 München (DE)
(72) Erfinder: Keyser, Jens, 90766 Fürth (DE); Brunhuber, Christian, 91275 Auerbach (DE); Reimuth, Oliver, 91058 Erlangen (DE)

(57) **Zusammenfassung**

Die Erfindung betrifft ein Synthesegasbrennstoffsystem (8) mit einer von einer Vergasungseinrichtung (10) abzweigenden und in einer Übergabestelle (40) für den Anschluss an einen Brenner endenden Haupt-Synthesegasleitung (9), wobei in der Haupt-Synthesegasleitung (9) eine Zweitbrennstoffbeimischvorrichtung (33) und eine Durchmischvorrichtung (34) angeordnet sind, wobei die Durchmischvorrichtung (34) der Zweitbrennstoffbeimischvorrichtung (33) in Strömungsrichtung eines Synthesegases nachgeordnet ist. Die Erfindung betrifft ferner ein Verfahren zum Betrieb eines Synthesegasbrennstoffsystems (8) für schnelle Laständerungen einer Gasturbine (2) im Synthesegasbetrieb.

## Beschreibung

Die Erfindung betrifft ein Synthesegasbrennstoffsystem, insbesondere für eine Gas- und Dampfturbinenanlage, und bezieht sich auf das Problem der schnellen Laständerungen der Gasturbine, wie sie beispielsweise durch die Forderungen des britischen Grid Codes hervorgerufen werden. Die Erfindung betrifft ferner ein Verfahren zum Betrieb eines Synthesegasbrennstoffsystems für schnelle Laständerungen einer Gasturbine im Synthesegasbetrieb.

Als Alternative zu herkömmlichen Dampfkraftwerken (DKW), vor allem in Hinsicht auf die potentiellen Wirkungsgradvorteile der GuD-Anwendung im Vergleich zum DKW, wird der Einsatz von Vergasungskraftwerken (IGCC-Integrated Gasification Combined Cycle) zur Erzeugung von Synthesegasen mit anschließendem Einsatz in einem GuD gesehen. Wesentlich für den Betrieb einer IGCC-Anlage ist das dem GuD vorgeschaltete Synthesegasbrennstoffsystem, bestehend aus den Einzelkomponenten Stickstoffverdünnung, Wasser-/Dampf-Sättigung, Erdgasbeimischung, Luftentnahme und Wärmetauscher.

Das Ziel des Synthesegasbrennstoffsystems ist die Bereitstellung eines konditionierten Synthesegases entsprechend der Temperatur- und Heizwertanforderungen des stromabwärts liegenden Verbrauchers, der Gasturbine, sowie im luftseitig integrierten Fall die Bereitstellung von Druckluft für die integrierte Verwendung in der Luftzerlegungsanlage. Die Konditionierung und somit Heizwerteinstellung des am Eintritt in das Synthesegasbrennstoffsystem vorliegenden Roh-Synthesegases erfolgt über die oben genannten Einzelkomponenten/-systeme. Die Temperatur des konditionierten Synthesegases wird vor dem Austritt aus dem Synthesegasbrennstoffsystem mit einem Wärmetauscher eingestellt. Die Druckluft wird bei (teil-) integrierter Luftentnahme dem Gasturbinenverdichter, bei nicht integrierter Luftentnahme einem separaten Verdichter entnommen und mittels integrierten Wärmetauschern auf das von der Luftzerlegungsanlage geforderte Temperaturniveau eingestellt. Die DE 100 02 084 C2 beschreibt eine solche Anlage.

Das Synthesegasbrennstoffsystem ist aufgrund der Interaktion mit den beteiligten Hauptsystemen des IGCC (Luftzerlegungsanlage, Vergasung, Gaswäsche, GuD) derzeitig als grundlastfähiges Teilsystem der Komplettanlage ausgeführt, wobei steile Lastgradienten der Gasturbine, dargestellt mittels Heizwertsteigerung, nicht realisiert werden können.

Da zunehmend die Verfügbarkeit einer Fahrweise mit steilen Lastgradienten der Gasturbine in der IGCC-Konfiguration unter Nutzung des Synthesegasbetriebes gefordert wird, muss das Synthesegasbrennstoffsystem möglichst unabhängig und mit nur geringen Auswirkung auf die benachbarten Hauptsysteme an diese geänderten Randbedingungen angepasst werden.

Bekannt sind eine Vorrichtung bzw. ein Verfahren aus der EP 1 277 920 A1 mit einer Kraftwerksanlage mit einer Gasturbine, der eine Brennkammer mit mindestens einem Brenner zugeordnet ist, und mit einem der Brennkammer vorgeschalteten Brennstoffsystem, das einer Vergasungseinrichtung für fossilen Brennstoff und eine von der Vergasungseinrichtung abzweigende und in die Brennkammer mündende Gasleitung umfasst. Die GuD-Anlage kann dabei sowohl mit dem Synthesegas, als auch mit einem Zweitbrennstoff, wie z.B. Erdgas oder Öl, betrieben werden. Dazu ist der Brenner als Zwei- oder Mehrstoffbrenner ausgelegt. Durch Beimischen von Erdgas oder Dampf zum Synthesegas kann der Heizwert eingestellt werden. Beim Verfahren zum Betrieb eine Brenners einer Gasturbine wird ein fossiler Brennstoff vergast und vergaster fossiler Brennstoff als Synthesegas dem der Gasturbine zugeordneten Brenner zur Verbrennung zugeführt.

Nachteilig hieran ist, dass auch bei Zugabe von Erdgas zum Synthesegas im Falle einer Laststeigerung aufgrund der Strömungsverzögerung des Brennstoffmassenstromes bis zum Erreichen der Gasturbine, resultierend aus der Größe und Länge der verbauten Apparate und deren Anordnung, die Anforderungen an einen steilen Lastgradienten möglicherweise nicht erfüllt werden bzw. die mit der Laständerung verbundene kurzfristige Beimischung evtl. auch großer Mengen von Erdgas die gezielte Einstellung des Heizwertes des Brenngases erschwert.

Aufgabe ist es, die genannte Vorrichtung und das genannte Verfahren weiterzuentwickeln, so dass Forderungen an einen steilen Lastgradienten erfüllt werden.

Erfindungsgemäß wird diese Aufgabe gelöst durch die Vorrichtung gemäß Anspruch 1 und das Verfahren gemäß Anspruch 11. Vorteilhafte Weiterbildungen der Erfindung sind in den jeweiligen abhängigen Ansprüchen definiert.

Indem in der Haupt-Synthesegasleitung eine Zweitbrennstoffbeimischvorrichtung und eine Durchmischvorrichtung angeordnet sind, wobei die Durchmischvorrichtung der Zweitbrennstoffbeimischvorrichtung in Strömungsrichtung eines Synthesegases nachgeordnet ist, wird folgendes erreicht:

Der notwendige Heizwert und Brenngasmassenstrom für eine schnelle Laststeigerung bei vorübergehendem Synthesegasmangel aufgrund eines begrenzten Lastgradienten des Vergasers wird bereitgestellt, wobei die Durchmischvorrichtung für eine besonders gleichförmige und strähnenfreie Vermischung des Zweitbrennstoffs mit dem Synthesegas sorgt, wodurch sich der Heizwert des Synthesegas/Zweitbrennstoff-Gemischs zielgenau einstellen lässt.

In einer vorteilhaften Ausführungsform ist die Zweitbrennstoffbeimischvorrichtung zumindest im Bereich der Übergabestelle, wenn nicht sogar unmittelbar vor der Übergabestelle für den Anschluss an einen Brenner in der Haupt-Synthesegasleitung angeordnet. Eine schnelle Laststeigerung der kompletten IGCC-Anlage ist an die schnelle Verfügbarkeit des nutzbaren Brennstoffmassenstromes (Synthesegas plus Zweitbrennstoff) in Verbindung mit einem ausreichenden Heizwert gekoppelt. Bei der Nutzung des Zweitbrennstoffes zur Brennstoffmassenstrom- und Heizwertsteigerung muss im Falle einer schnellen Laststeigerung, aufgrund der Strömungsverzögerung des Brennstoffmassenstromes bis zum Erreichen der Gasturbine darauf geachtet werden, dass die Einspeisung so nah wie möglich an der Gasturbine liegt.

Dabei ist es zweckmäßig, wenn eine Brennstoffleitung in die Zweitbrennstoffbeimischvorrichtung mündet und eine Regelarmatur in die Brennstoffleitung geschaltet ist. Die Regelarmatur gewährleistet eine genaue Mengen- und Druckregelung des Erdgases in Abhängigkeit vom vordefinierten Zweitbrennstoff/Synthesegas-Verhältnis und dem zulässigen Heizwert.

Dabei ist es vorteilhaft, wenn in Strömungsrichtung eines Synthesegases der Durchmischvorrichtung nachgeordnet ein Heizwertmessgerät für die Kontrollmessung zur Einhaltung des vordefinierten Heizwertes des Brenngasgemisches angeordnet ist.

Vorteilhafter Weise sind Mittel vorgesehen, mit denen ein vom Heizwertmessgerät ermittelter Heizwert an die Regelarmatur übermittelt wird, so dass die Beimischung der Zweitbrennstoffmenge nachgeregelt werden kann.

Weiterhin vorteilhaft ist es, wenn in die Brennstoffleitung ein Wärmetauscher geschaltet ist, so dass der Zweitbrennstoff vor der Zweitbrennstoffbeimischung auf ein von der Sättigungslinie des Synthesegases ausreichend abweichendes Temperaturniveau vorgewärmt werden kann.

Es ist zweckmäßig, wenn die Durchmischvorrichtung ein Filter ist. Ein ohnehin in der Haupt-Synthesegasleitung notwendiger Filter kann vorteilhafter Weise auch zum Durchmischen des Synthesegas/Zweitbrennstoff-Gemischs genutzt werden, indem er nicht an irgendeiner anderen Stelle, sondern in Strömungsrichtung des Synthesegases hinter die Zweitbrennstoffbeimischvorrichtung in der Haupt-Synthesegasleitung angeordnet ist.

Zweckmäßigerweise ist die Zweitbrennstoffbeimischvorrichtung eine Erdgasbeimischvorrichtung. Aufgrund des hohen Heizwerts lässt sich mit Ergas ein besonders schneller Lastwechsel durchführen.

Vorteilhafter Weise ist in einer Gas- und Dampfturbinenanlage mit einer Gasturbine, einer Brennkammer und einem Synthesegasbrennstoffsystem die Übergabestelle des Brennstoffsystems mit einem Brenner der Brennkammer verbunden.

Im erfinderischen Verfahren zum Betrieb eines Synthesegasbrennstoffsystems für schnelle Laständerungen einer Gasturbine im Synthesegasbetrieb wird ein Zweitbrennstoff einem Synthesegas beigemischt und das Synthesegas/Zweitbrennstoff-Gemisch durchmischt und einer Brennkammer der Gasturbine zugeführt.

Vorteilhafter Weise erfolgen die Beimischung und Durchmischung direkt stromauf der Brennkammer.

Vorteilhafter Weise wird die Zweitbrennstoffbeimischung geregelt. Zweckmäßigerweise erfolgt dies in Abhängigkeit des Heizwerts des Synthesegas/Zweitbrennstoff-Gemischs der zu diesem Zweck gemessen wird.

Es ist vorteilhaft, wenn der Zweitbrennstoff vorgewärmt wird.

Weiterhin ist es vorteilhaft, wenn das Synthesegas konditioniert wird, bevor der Zweitbrennstoff beigemischt wird.

Die Erfindung wird beispielhaft anhand der Zeichnungen näher erläutert. Es zeigen schematisch und nicht maßstäblich:
- FIG 1: ein bekanntes Synthesegasbrennstoffsystem,
- FIG 2: ein Synthesegasbrennstoffsystem gemäß der Erfindung mit einer Zweitbrennstoffbeimischvorrichtung und
- FIG 3: den zeitlichen Verlauf von Leistung, Synthesegasmassenstrom und Zweitbrennstoffmassenstrom bei einer Laststeigerung.

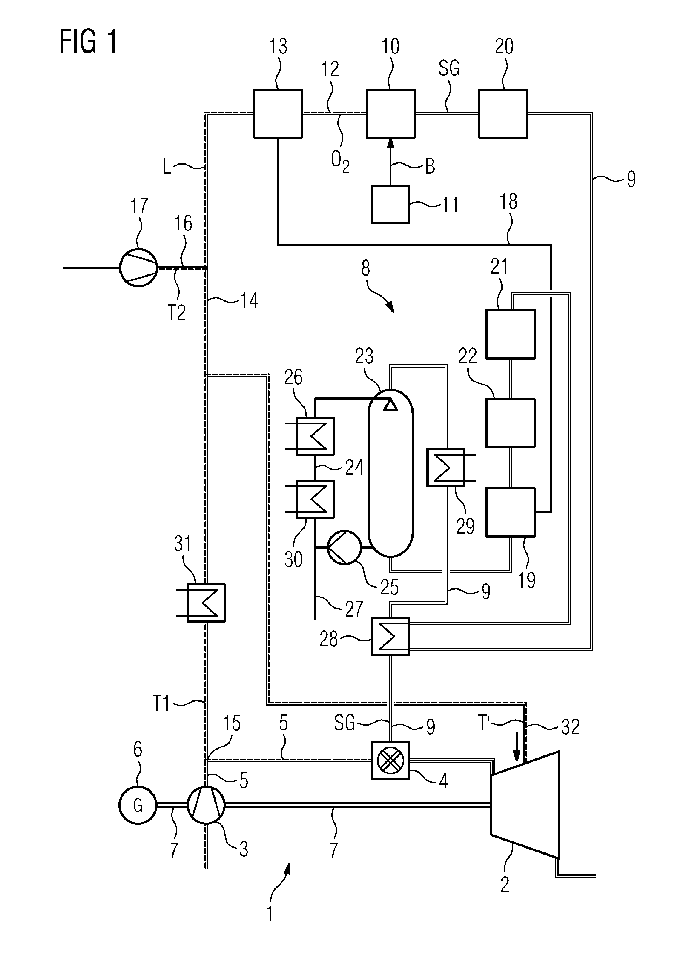

Eine bekannte Gas- und Dampfturbinenanlage umfasst eine Gasturbinenanlage 1 gemäß der Figur 1 und eine nicht näher dargestellte Dampfturbinenanlage. Die Gasturbinenanlage 1 umfasst eine Gasturbine 2 mit angekoppeltem Luftverdichter 3 und eine der Gasturbine 2 vorgeschaltete Brennkammer 4, die an eine Druckluftleitung 5 des Verdichters 3 angeschlossen ist. Die Gasturbine 2 und der Luftverdichter 3 sowie ein Generator 6 sitzen auf einer gemeinsamen Welle 7.

Die Gasturbinenanlage 1 ist für den Betrieb mit einem vergasten Rohgas oder Synthesegas SG, das durch die Vergasung eines fossilen Brennstoffs B erzeugt wird, ausgelegt. Als Synthesegas kann beispielsweise vergaste Kohle oder vergastes Öl vorgesehen sein. Hierzu umfasst die Gasturbinenanlage 1 ein Synthesegasbrennstoffsystem 8, über das der Brennkammer 4 der Gasturbine 2 Synthesegas zuführbar ist. Das Synthesegasbrennstoffsystem 8 umfasst eine Haupt-Synthesegasleitung 9, die eine Vergasungseinrichtung 10 mit der Brennkammer 4 der Gasturbine 2 verbindet. Der Vergasungseinrichtung 10 ist über ein Eintragssystem 11 beispielsweise Kohle, Erdgas, Öl oder Biomasse als fossiler Brennstoff B zuführbar. Weiterhin umfasst das Synthesegasbrennstoffsystem 8 Komponenten, die zwischen der Vergasungseinrichtung 10 und der Brennkammer 4 der Gasturbine 2 in die Haupt-Synthesegasleitung 9 geschaltet sind.

Zur Bereitstellung des für die Vergasung des fossilen Brennstoffs B benötigten Sauerstoffs O₂ ist der Vergasungseinrichtung 10 über eine Sauerstoffleitung 12 eine Luftzerlegungsanlage 13 vorgeschaltet. Die Luftzerlegungsanlage 13 ist eingangsseitig mit einem Luftstrom L beaufschlagbar, der sich aus einem ersten Teilstrom T1 und einem zweiten Teilstrom T2 zusammensetzt. Der erste Teilstrom T1 ist der im Luftverdichter 3 verdichteten Luft entnehmbar. Dazu ist die Luftzerlegungsanlage 13 eingangsseitig an eine Entnahmeluftleitung 14 angeschlossen, die an einer Zweigstelle 15 von der Druckluftleitung 5 abzweigt. In die Entnahmeluftleitung 14 mündet zudem eine weitere Luftleitung 16, in die ein zusätzlicher Luftverdichter 17 geschaltet ist und über die der zweite Teilstrom T2 der Luftzerlegungsanlage 13 zuführbar ist. Im Ausführungsbeispiel setzt sich somit der der Luftzerlegungsanlage 13 zuströmende gesamte Luftstrom L zusammen aus dem von der Druckluftleitung 5 abgezweigten Teilstrom T1 (abzüglich einer nachfolgend erläuterten Teilmenge T') und aus dem vom zusätzlichen Luftverdichter 17 geförderten Luftstrom T2. Ein derartiges Schaltungskonzept wird auch als teilintegriertes Anlagenkonzept bezeichnet. In einer alternativen Ausgestaltung, dem sogenannten vollintegrierten Anlagenkonzept, kann die weitere Luftleitung 16 mitsamt dem zusätzlichen Luftverdichter 17 entfallen, so dass die Bespeisung der Luftzerlegungsanlage 13 mit Luft vollständig über den der Druckluftleitung 5 entnommenen Teilstrom T1 erfolgt.

In die Entnahmeluftleitung 14 ist ein Wärmetauscher 31 geschaltet, um Wärme aus der Entnahmeluft wieder zurückzugewinnen, wodurch ein besonders hoher Wirkungsgrad der Gas- und Dampfturbinenanlage erreichbar ist.

In Strömungsrichtung des Teilstroms T1 gesehen hinter dem Wärmetauscher 31 zweigt von der Entnahmeluftleitung 14 eine Kühlluftleitung 32 ab, über die der Gasturbine 2 eine Teilmenge T' des gekühlten Teilstroms T1 als Kühlluft zur Schaufelkühlung zuführbar ist.

Der in der Luftzerlegungsanlage 13 bei der Zerlegung des Luftstroms L zusätzlich zum Sauerstoff O₂ gewonnene Stickstoff N₂ wird über eine an die Luftzerlegungsanlage 13 angeschlossene Stickstoffleitung 18 einer Mischvorrichtung 19 zugeführt und dort dem Synthesegas SG zugemischt. Die Mischvorrichtung 19 ist dabei für eine besonders gleichförmige und strähnenfreie Vermischung des Stickstoffs N₂ mit dem Synthesegas SG ausgebildet.

Das von der Vergasungseinrichtung 10 abströmende Synthesegas SG gelangt über die Haupt-Synthesegasleitung 9 zunächst in einen Synthesegas-Abhitzedampferzeuger 20, in dem durch Wärmetausch mit einem Strömungsmedium eine Abkühlung des Synthesegases SG erfolgt. Bei diesem Wärmetausch erzeugter Hochdruckdampf kann in nicht näher dargestellter Weise einer Hochdruckstufe eines Wasser-Dampf-Kreislaufs einer Dampfturbinenanlage zugeführt werden.

In Strömungsrichtung des Synthesegases SG gesehen hinter dem Synthesegas-Abhitzedampferzeuger 20 und vor einer Mischvorrichtung 19 sind in die Haupt-Synthesegasleitung 9 eine Entstaubungseinrichtung 21 für das Synthesegas SG sowie eine Entschwefelungsanlage 22 geschaltet. In alternativer Ausgestaltung kann anstelle der Entstaubungseinrichtung 21, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs in der Brennkammer 4 ist eine Beladung des vergasten Brennstoffs mit Wasserdampf vor Eintritt in die Brennkammer 4 vorgesehen. Diese kann in wärmetechnisch besonders vorteilhafter Weise in einem Sättigersystem erfolgen. Dazu ist in die Haupt-Synthesegasleitung 9 ein Sättiger 23 geschaltet, in dem der vergaste Brennstoff im Gegenstrom zu aufgeheiztem Sättigerwasser geführt ist. Das Sättigerwasser zirkuliert dabei in einem an den Sättiger 23 angeschlossenen Sättigerkreislauf 24, in den eine Umwälzpumpe 25 sowie zur Vorheizung des Sättigerwassers ein Wärmetauscher 26 geschaltet sind. Zum Ausgleich der bei der Sättigung des vergasten Brennstoffs auftretenden Verluste an Sättigerwasser ist an den Sättigerkreislauf 24 eine Einspeiseleitung 27 angeschlossen.

In Strömungsrichtung des Synthesegases SG gesehen hinter dem Sättiger 23 ist in die Haupt-Synthesegasleitung 9 sekundärseitig ein als Synthesegas-Mischgas-Wärmetauscher wirkender Wärmetauscher 28 geschaltet. Der Wärmetauscher 28 ist dabei primärseitig an einer Stelle vor der Entstaubungseinrichtung 21 ebenfalls in die Haupt-Synthesegasleitung 9 geschaltet, so dass das der Entstaubungseinrichtung 21 zuströmende Synthesegas SG einen Teil seiner Wärme auf das aus dem Sättiger 23 abströmende Synthesegas SG überträgt. Die Führung des Synthesegases SG über den Wärmetauscher 28 vor Eintritt in die Entschwefelungsanlage 22 kann dabei auch bei einem hinsichtlich der anderen Komponenten abgeänderten Schaltungskonzept vorgesehen sein. Insbesondere bei Einschaltung einer Rußwäscheeinrichtung kann der Wärmetauscher bevorzugt synthesegasseitig stromab der Rußwäscheeinrichtung angeordnet sein.

Zwischen den Sättiger 23 und den Wärmetauscher 28 ist in die Haupt-Synthesegasleitung 9 sekundärseitig ein weiterer Wärmetauscher 29 geschaltet, der primärseitig speisewasserbeheizt oder auch dampfbeheizt sein kann. Durch den als Synthesegas-Reingas-Wärmetauscher ausgebildeten Wärmetauscher 28 und den Wärmetauscher 29 ist dabei eine besonders zuverlässige Vorwärmung des der Brennkammer 4 der Gasturbine 2 zuströmenden Synthesegases SG auch bei verschiedenen Betriebszuständen der Gas- und Dampfturbinenanlage gewährleistet.

Zur Wärmeeinkopplung in den Sättigerkreislauf 24 ist zusätzlich zum Wärmetauscher 26, der beispielsweise mit aufgeheiztem, nach einem Speisewasservorwärmer abgezweigtem Speisewasser beaufschlagbar ist, ein Sättigerwasser-Wärmetauscher 30 vorgesehen, der primärseitig mit Speisewasser aus einem nicht dargestellten Speisewasserbehälter beaufschlagbar ist.

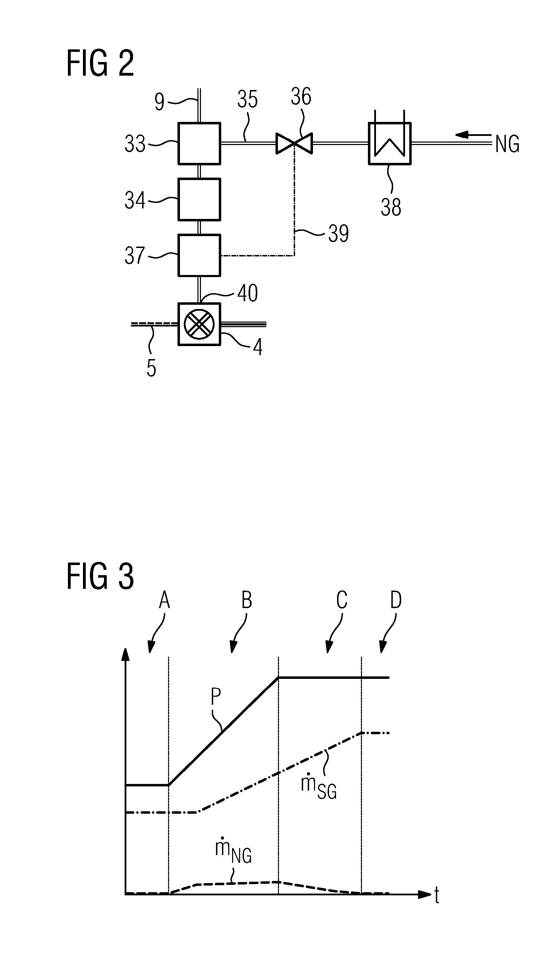

Figur 2 beschreibt das erfinderische Synthesegasbrennstoffsystem 8 mit einer Übergabestelle 40 für den Anschluss an einen Brenner der Brennkammer 4 einer Gasturbine 2 am Ende der Haupt-Synthesegasleitung 9, bei dem eine Zweitbrennstoffbeimischvorrichtung 33 zur Beimischung von Erdgas zum konditionierten Synthesegas vor einer Durchmischvorrichtung 34 und den Hauptregelarmaturen (nicht dargestellt) der Gasturbine 2 angeordnet ist.

Die Durchmischvorrichtung 34 ist ein Filter, der neben seiner Filtrationsfunktion als Durchmischer zwischen dem konditionierten Synthesegas und dem beigemischten Zweitbrennstoff (Erdgas) wirkt.

Die Zuschaltung der Ergasbeimischung erfolgt dabei über eine Brennstoffleitung 35, die in die Zweitbrennstoffbeimischvorrichtung 33 mündet und in die eine Regelarmatur 36 geschaltet ist, die eine genaue Mengen- und Druckregelung des Erdgases in Abhängigkeit vom vordefinierten Erdgas/konditioniertes Synthesegas-Verhältnis und dem zulässigen Heizwert gewährleistet.

Die Kontrollmessung zur Einhaltung des vordefinierten Heizwertes des Brenngasgemisches nach der Beimischung erfolgt mit einem schnellen Heizwertmessgerät 37, um schnelle Heizwertänderungen an die Regelstrecke der Erdgasbeimischung weiterzugeben 39.

In Abhängigkeit von dem für die Überhitzung des Synthesegases zur Verfügung stehenden Primärwärmeübertragermedium und dem Wassergehalt im konditionierten Synthesegas ist das Erdgas vor der Beimischung mit einem Wärmetauscher 38 auf ein von der Sättigungslinie des Synthesegases ausreichend abweichendes Temperaturniveau vorzuwärmen.

Figur 3 beschreibt den zeitlichen Verlauf von Leistung P, Synthesegasmassenstrom ṁ_{SG} und Zweitbrennstoffmassenstrom ṁ_{NG} bei einer Laststeigerung. Im Zeitraum A ist die Last bzw. die Leistung P konstant. Der Synthesegasmassenstrom ṁ_{SG} ist daher ebenfalls konstant und der Zweitbrennstoffmassenstrom ṁ_{NG} ist null. Bei einer schnellen Lastzunahme soll die Leistung P innerhalb eines vorgegebenen Zeitintervalls B auf einen höheren Wert angehoben werden. Wenn die Zunahme des Synthesegasmassenstroms ṁ_{SG} nicht ausreichend schnell erfolgen kann, wird ein Zweitbrennstoff dem Synthesegas beigemischt, der Zweitbrennstoffmassenstrom ṁ_{NG} ist somit ungleich null. Ist das Zielniveau der Leistung P erreicht, kann im Zeitraum C die Beimischung des Zweitbrennstoffs langsam gedrosselt werden, d.h. der Zweitbrennstoffmassenstrom ṁ_{NG} nähert sich wieder null, während der Synthesegasmassenstrom ṁ_{SG} weiter zunimmt, bis der Brennstoffbedarf vollständig vom Synthesegas gedeckt wird (Zeitraum D).

## Patentansprüche

1. Synthesegasbrennstoffsystem (8) mit einer von einer Vergasungseinrichtung (10) abzweigenden und in einer Übergabestelle (40) für den Anschluss an einen Brenner endenden Haupt-Synthesegasleitung (9), **dadurch gekennzeichnet, dass** in der Haupt-Synthesegasleitung (9) eine Zweitbrennstoffbeimischvorrichtung (33) und eine Durchmischvorrichtung (34) angeordnet sind, wobei die Durchmischvorrichtung (34) der Zweitbrennstoffbeimischvorrichtung (33) in Strömungsrichtung eines Synthesegases nachgeordnet ist.

2. Das Synthesegasbrennstoffsystem nach Anspruch 1, wobei die Zweitbrennstoffbeimischvorrichtung (33) im Bereich der Übergabestelle angeordnet ist.

3. Das Synthesegasbrennstoffsystem nach Anspruch 1 oder 2, wobei die Zweitbrennstoffbeimischvorrichtung (33) in Strömungsrichtung eines Synthesegases unmittelbar vor der Übergabestelle (40) angeordnet ist.

4. Das Synthesegasbrennstoffsystem nach einem der vorherigen Ansprüche, wobei eine Brennstoffleitung (35) in die Zweitbrennstoffbeimischvorrichtung (33) mündet und eine Regelarmatur (36) in die Brennstoffleitung (35) geschaltet ist.

5. Das Synthesegasbrennstoffsystem nach einem der vorherigen Ansprüche, wobei in Strömungsrichtung eines Synthesegases der Durchmischvorrichtung (34) nachgeordnet ein Heizwertmessgerät (37) angeordnet ist.

6. Das Synthesegasbrennstoffsystem nach den Ansprüchen 4 und 5, wobei Mittel (39) vorgesehen sind, mit denen ein vom Heizwertmessgerät (37) ermittelter Heizwert an die Regelarmatur (36) übermittelt wird.

7. Das Synthesegasbrennstoffsystem nach Anspruch 4, wobei in die Brennstoffleitung (35) ein Wärmetauscher (38) geschaltet ist.

8. Das Synthesegasbrennstoffsystem nach einem der vorherigen Ansprüche, wobei die Durchmischvorrichtung (34) ein Filter ist.

9. Das Synthesegasbrennstoffsystem nach einem der vorherigen Ansprüche, wobei die Zweitbrennstoffbeimischvorrichtung (33) eine Erdgasbeimischvorrichtung ist.

10. Gas- und Dampfturbinenanlage mit einer Gasturbine (2), einer Brennkammer (4) und einem Synthesegasbrennstoffsystem (8) nach einem der vorhergehenden Ansprüche, wobei die Übergabestelle (40) mit einem Brenner der Brennkammer (4) verbunden ist.

11. Verfahren zum Betrieb eines Synthesegasbrennstoffsystems (8) für schnelle Laständerungen einer Gasturbine (2) im Synthesegasbetrieb, **dadurch gekennzeichnet, dass** ein Zweitbrennstoff einem Synthesegas beigemischt wird und das Synthesegas/Zweitbrennstoff-Gemisch durchmischt wird und einer Brennkammer (4) der Gasturbine (2) zugeführt wird.

12. Das Verfahren nach Anspruch 11, wobei Beimischung und Durchmischung direkt stromauf der Brennkammer (4) erfolgen.

13. Das Verfahren nach einem der Ansprüche 11 und 12, wobei die Zweitbrennstoffbeimischung geregelt wird.

14. Das Verfahren nach einem der Ansprüche 11 bis 13, wobei zur Regelung der Zweitbrennstoffbeimischung ein Heizwert des Synthesegas/Zweitbrennstoff-Gemischs gemessen wird.

15. Das Verfahren nach einem der Ansprüche 11 bis 14, wobei der Zweitbrennstoff vorgewärmt wird.

16. Das Verfahren nach einem der Ansprüche 11 bis 15, wobei das Synthesegas konditioniert wird, bevor der Zweitbrennstoff beigemischt wird.
